(19) Europäisches Patentamt
European Patent Office
Office européen des brevets

(11) Veröffentlichungsnummer : **0 126 170**
**B1**

(12) # EUROPÄISCHE PATENTSCHRIFT

(45) Veröffentlichungstag der Patentschrift : **11.11.87**

(51) Int. Cl.⁴ : **B 01 D 53/32**, B 01 D 53/34, C 25 B 1/22

(21) Anmeldenummer : **83104950.7**

(22) Anmeldetag : **19.05.83**

(54) **Verfahren und Vorrichtung zum Entfernen von SO2 aus SO2-haltigen Gasen.**

(43) Veröffentlichungstag der Anmeldung : **28.11.84 Patentblatt 84/48**

(45) Bekanntmachung des Hinweises auf die Patenterteilung : **11.11.87 Patentblatt 87/46**

(84) Benannte Vertragsstaaten : **AT BE CH DE FR GB LI SE**

(56) Entgegenhaltungen :
**DE-A- 2 901 577**
**DE-A- 2 951 425**
**DE-B- 2 736 488**
**US-A- 4 332 650**

(73) Patentinhaber : **DECHEMA Deutsche Gesellschaft für chemisches Apparatewesen, Chemische Technik und Biotechnologie e.V.**
**Theodor-Heuss-Allee 25**
**D-6000 Frankfurt am Main 97 (DE)**

(72) Erfinder : **Kochanek, Wolfgang, Dipl.-Chem.**
**c/o Dechema-Institut**
**D-6000 Frankfurt/M. 97 (DE)**
Erfinder : **Linzbach, Gerold, Dipl.-Chem.**
**c/o Dechema-Institut**
**D-6000 Frankfurt/M. 97 (DE)**
Erfinder : **Kuhn, Michael, Dipl.-Chem.**
**c/o Dechema-Institut**
**D-6000 Frankfurt/M. 97 (DE)**
Erfinder : **Kreysa, G., Dr.**
**c/o Dechema-Institut**
**D-6000 Frankfurt/M. 97 (DE)**

(74) Vertreter : **Beil, Hans Chr., Dr. et al**
**Beil, Wolff und Beil, Rechtsanwälte Adelonstrasse 58**
**Postfach 80 01 40**
**D-6230 Frankfurt am Main 80 (DE)**

EP 0 126 170 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung ist die Entfernung von $SO_2$ aus $SO_2$-haltigen Gasen und die Vorrichtung zu deren Durchführung, welche in den Patentansprüchen beschrieben sind.

Das zunehmende Bewußtsein für die ökologischen Gefahren, die von einer steigenden $SO_2$-Emission ausgehen, hat zu einem erhöhten Interesse an Verfahren zur $SO_2$-Absorption geführt. Von den bisher bekannten Verfahren arbeiten einige mit der direkten elektrochemischen Oxidation von $SO_2$ (KREYSA, DE-A-2 901 577)[1], mit der Absorption von $SO_2$ in einem kupfersulfathaltigen Elektrolyten mit suspendiertem CuO (VOLCOVINSCHI, Rumänisches Patent 67220)[2] oder mit einer Oxidation des $SO_2$ durch Sauerstoff bei erhöhter Temperatur und CuO als Zwischenprodukt (VIZCARRA[3], Environmental Technology Letters 2,215,1981 ; Japanisches Patent[4] 57-32720). Die beiden letzten Verfahren (3,4) zeichnen sich dadurch as, daß das Kupfer aus dem gebildeten $CuSO_4$ durch Reduktion mit geeigneten Hilfsstoffen ($CO, CH_4$) zurückgewonnen wird, so daß insgesamt nur eine Aufbaukonzentration des $SO_2$ stattfindet. (Zitiert wurden nur Verfahren, die unter bestimmten Gesichtspunkten mit dem hier beschriebenen Verfahren vergleichbar sind).

Aufgabe der Erfindung ist es, $SO_2$ aus $SO_2$-haltigen Gasen zu entfernen, wobei der spezifische Energieverbrauch niedriger ist als bei herkömmlichen Verfahren und keine zu deponierenden Abfallprodukte entstehen.

Das erfindungsgemäße Verfahren ermöglicht dies durch eine geeignete Kombination von chemischen und elektrochemischen Teilreaktionen, deren Durchführung ohne Beschränkung auf apparative Details in Beispiel 1 und 2 beschrieben wird.

Die Abreicherung des $SO_2$ nach dem erfindungsgemäßen Verfahren erfolgt in zwei Stufen :

1. Oxidation des $SO_2$ durch Sauerstoff (Luft) in Gegenwart von Kupfer

$$\text{Cu} \xrightarrow{O_2} \text{Kupferoxid} \xrightarrow{SO_2/O_2} \text{CuSO}_4$$

2. Direkte elektrochemische Oxidation

Die Oxidation des $SO_2$ in der ersten Stufe erfolgt verfahrenstechnisch in einem Absorberraum (A, Fig. 1), der mit Kupfer oder kupferhaltigem Trägermaterial jeweils in Form einer Schüttung gefüllt ist, wobei das Kupfer zumindest an der Oberfläche als Kupferoxid vorliegt. Über diese Füllung rieselt eine wäßrige Lösung des nach obiger Gleichung gebildeten Kupfersulfats. Die Konzeption dieser Stufe in der beschriebenen Form gewährleistet einen intensiven kontakt der drei Phasen, ohne daß die Gefahr der Bildung von Strömungskanälen besteht.

Die direkte elektrochemische Oxidation des $SO_2$ (Teilstufe 2) wird in einem Anodenraum (B, Fig. 1) durchgeführt, der gemäß/1/mit einer Anode großer Oberfläche (Füllkörper, Streckmetallstapel etc.) versehen ist. In dem zitierten Patent/1/findet als kathodische Gegenreaktion zur anodischen $SO_2$-Oxidation die Bildung von Wasserstoff statt. Aus den elektrochemischen Einzelpotentialen der beteiligten Teilreaktionen ergibt sich dabei eine thermodynamische Mindestzellspannung von + 0.2 V.

Beim erfindungsgemäßen Verfahren hingegen erfolgt im Kathodenraum (C, Fig. 1) die Abscheidung des in Teilstufe 1 gelösten Kupfers auf einer dreidimensionalen Elektrode (Kupferschüttung). Die bei rein thermodynamischer Betrachtung sogar Energie liefernde Kombination der Elektrodenreaktionen ($SO_2 \rightarrow SO_4^{2-}$, $Cu^{2+} \rightarrow Cu^{o}$, $U_{rev} = -0.14$ V) führt selbst unter Berücksichtigung der realen Konzentrationsverhältnisse und der kinetischen Hemmungen (Überspannungen) zu einer deutlichen Verringerung des spezifischen Energieverbrauchs ($E = U \cdot I$). Dieser wird darüber hinaus durch die Verringerung des durch direkte anodische Oxidation (Teilstufe 2) zu entfernenden $SO_2$-Anteils (parallele chemische Umsetzung des $SO_2$ mit Luft/Kupfer) weiter erniedrigt.

Unter der Maßgabe, daß pro Zeiteinheit im Kathodenraum die gleiche Menge Kupfer abgeschieden werden muß, die im Absorberraum aufgelöst wird, ergibt sich, bei Berücksichtigung eventueller Nebenreaktionen in den drei Prozeßstufen, die folgende Auslegungsgleichung für das einzustellende Verhältnis zwischen anodischer ($SO_2^{anox}$) und chemischer ($SO_2^{chemox}$) $SO_2$ Oxidation :

$$\frac{SO_2^{anox}}{SO_2^{gesamt}} = \frac{1}{1 + \frac{\alpha\beta}{\gamma}} = \frac{1}{1 + \frac{SO_2^{chemox}}{SO_2^{anox}}} \qquad (2)$$

mit :

$$\alpha = \frac{Cu^{2+}_{(SO_2)} \text{ (aufgelöst über } SO_2 \text{ Absorption)}}{Cu^{2+}_{(SO_2)} + Cu^{2+}_{(N)} \text{ (aufgelöst über Nebenreaktion)}}$$

β = Stromausbeute der kathodischen Kupferabscheidung
γ = Stromausbeute der anodischen $SO_2$ Oxidation

Das Verhätnis $SO_2^{anox}/SO_2^{chemox}$ kann über die Variation der Betriebsparameter des Anoden- und Absorberraumes beeinflußt werden. Der $SO_2$ Umsatz im Absorberraum läßt sich Außer von den, die Kinetik der Reaktion bestimmenden, Größen (Temperatur, Kupfersulfatkonzentration, Druck, pH-Wert) durch verfahrenstechnische Eingriffe verändern (Veränderung der Verweilzeit durch entsprechende Führung der Gasströme in den beiden Teilstufen). Der Umsatzgrad der anodischen Stufe kann darüber hinaus vor allem durch die Wahl der Zellspannung beeinflußt werden.

Bei entsprechender Auslegung der gesamten Anlage ermöglicht das erfindungsgemäße Verfahren mehrere Betriebsweisen :

Bei identischem Aufbau von Kathodenkammer (C) und Absorberraum (A) ist es möglich, bei abnehmender Kupferoxidkonzentration und dementsprechend nachlassender Absorptionskapazität in Kammer (A) durch Umschalten der Gas- bzw. Flüssigkeitsströme die bisherige Kathodenkammer (C) mit regeneriertem Füllmaterial zur Absorptionskammer zu machen und in der bisherigen Absorptionskammer die Kupferrückgewinnung auf dem Füllmaterial einzuleiten (Fig. 2). Die für die $SO_2$ Absorption notwendige Bildung der Oxidschicht auf den regenerierten Füllkörpern kann durch Kontakt mit erwärmter Luft oder Wasserdampf in sehr kurzer Zeit durchgeführt werden.

Statt dieser zyklusweisen Regeneration und Auflösung der beiden Kupferschüttungen kann im Absorptionsraum aus kupferhaltigen Substanzen, die mit Luftsauerstoff Kupferoxid bilden, Kupfer gelöst und in der Gewinnungsstufe in konzentrierter Form abgeschieden werden, wobei aus dem Absorberraum kupferarmes Material ausgebracht und frisches nachgefüllt werden muß. Dies kann durch Austausch von Füllmaterial zwischen Absorber- und Kathodenraum (Abb. 3.1) oder durch Eintragen von frischem und Austragen von benutztem Füllmaterial (Abb. 3.2) geschehen.

Alle drei Kammertypen können mit einem einzigen Elektrolyten betrieben werden. Dies hat den Vorteil einer sehr einfachen Anlagensteuerung über den Kupfergehalt dieses Elektrolyten, der langfristig konstant sein muß.

Die Aufteilung des Gesamtkreislaufes in einen Katholyt- und einen Anoden-/Absorberkreislauf ermöglicht es, aus der am Ende eines Gewinnungszyklus anfallenden vergleichsweise kupferarmen Lösung einen Teilstrom auszuschleusen und nach einer entsprechenden Konditionierung (z. B. Feinreinigung durch Festbettelektrolyse DOS 2622497) sehr reine Schwefelsäure zu erhalten.

## Beispiel 1

In einer Dreikammerzelle nach Fig. 1 wurden Kathodenraum und Absorberraum mit je 500 g annähernd kugelförmigen Partikeln aus reinem Kupfer gefüllt.

Der mittlere Partikeldurchmesser betrug 0,89 mm. Das Schüttungsvolumen in den Kammern mit rechteckigem Querschnitt (50.15.400 mm) lag bei 92,5 $cm^3$, mit einem Lückengrad von 0,395 ergibt sich daraus eine spezifische Oberfläche von 41 $cm^2/cm^3$ Reaktorvolumen.

Der Anodenraum der Dreikammerzelle wurde mit Streckmetallelektroden von etwa 1 $m^2$ Gesamtoberfläche gefüllt (5 Bleche 50.400 mm). Als Elektrolyt für den Anodenraum und den Absorptionsraum wurde verdünnte Schwefelsäure mit 0,1 M/l $CuSO_4$ (Simulation eines vorhergehenden Absorptionszyklus in der Kathodenkammer) vorgelegt.

Die drei Zellkomponenten waren jeweils durch Diaphragmen voneinander getrennt.

Das $SO_2$/Luft-Gemisch wurde mit 138 l/h und einem $SO_2$ Volumenanteil von 0,65 % in den Anodenraum eingeleitet. Mit einer Stromausbeute von 99 % bei einer Stromstärke von 1 A konnte am Gasauslaß des Anodenraumes eine $SO_2$-Konzentration von 0,32 Vol% erreicht werden. Dieses Gasgemisch wurde nun in den Absorptionsraum geleitet. Die vor der Füllung mit verd. $H_2SO_4$ gewaschenen Kupferpartikel hatten sich sehr schnell mit einer Oxidschicht überzogen. Über die Partikelschüttung rieselte der Elektrolyt des Anodenraumes mit einem Durchfluß von 0,5-1 l/h.

Mit einer Partikelschüttung der beschriebenen Dimension konnte am Auslaß der Absorptionskammer ein $SO_2$ Volumenanteil von 0,07 % erzielt werden (Ausbeute : 86 %, bezogen auf gelöstes Kupfer). Der kathodische Teilschritt, die Kupferabscheidung auf der zweiten Partikelpackung verlief mit einer Stromausbeute von 99 %, die Zellspannung lag unter 500 mV. Da die Kupferauflösung im Absorptionsraum etwas geringer war als die Kupferabscheidung im Kathodenraum konnte die Kupferbilanz bei den gewählten Parametern langfristig nicht ausgeglichen werden. Durch Absenken des Zellstromes auf etwa 900 mA wurde dieser Effekt erwartungsgemäß behoben.

## Beispiel 2

Mit einer Partikelpackung von 1 kg (Verdoppelung der Schüttung aus Beispiel 1) konnte bei ansonsten gleichen Betriebsbedingungen (1A) eine $SO_2$ Endkonzentration von 0,002 Vol% erreicht werden. Die Kupferbilanz verlagerte sich nur unwesentlich und konnte nach der beschriebenen Methode stabilisiert werden.

Für die erzielten Resultate war es gleichgültig, ob die eingesetzten Lösungen vor Versuchsbeginn mit

$SO_2$ in Teilstufe 2 keine signifikanten Unterschiede zwischen Gleichstrom- und Gegenstrombetrieb (Gas-Elektrolyt) beobachtet werden. Die Strömungsgeschwindigkeit des Katholyten wurde in regelmäßigen Abständen kurz über den Lockerungspunkt der der Schüttung hinaus erhöht, um durch diese Umschichtung der Partikel eine gleichmäßigere Abscheidungsdicke auf der gesamten Schüttung zu erzielen.

**Patentansprüche**

1. Verfahren zur Entfernung von $SO_2$ aus $SO_2$-haltigen Gasen dadurch gekennzeichnet, daß eine aus mehreren untereinander durch Diaphragmen verbundenen Teilkammern bestehende Mehrkammerzelle benutzt wird, in der ein Teil des $SO_2$ in einer Teilkammer in Gegenwart von wäßrigem Medium, Luft und/oder Sauerstoff und von Kupferoxid und/oder metallischem Kupfer unter Bildung von Kupfersulfat, das sich in dem wäßrigen Medium löst, oxidiert und damit aus dem Gasstrom entfernt wird und in einer weiteren, elektrisch leitende Füllkörper und/oder Elektrodeneinbauten enthaltenden Teilkammer ein anderer Teil des $SO_2$ mit einer elektrolytisch leitfähigen Waschflüssigkeit in Kontakt gebracht und das $SO_2$ nach Absorption elektrochemisch durch anodische Oxidation aus dem zu reinigenden Gasstrom entfernt wird, wobei als kathodische Gegenreaktion in einer weiteren Kammer der Mehrkammerzelle das bei der $SO_2$-Entfernung gebildete gelöste Kupfer an elektrisch leitfähigen Füllkörper und/oder Elektrodeneinbauten zu metallischem Kupfer reduziert wird.

2. Verfahren nach Anspruch 1 dadurch gekennzeichnet, daß die Absorberkapazität des Absorptionsraumes der Mehrkammerzelle bei nachlassender Absorberkapazität durch Zufügen kupferreicheren und Austragen kupferärmeren Materials regeneriert wird, wobei als frisches Teilmaterial metallisches Kupfer aus der im Kathodenraum ablaufenden Kupferrückgewinnung oder anlagenexternes Kupfer eingesetzt werden kann (Fig. 3.1, 3.2).

3. Verfahren nach Anspruch 1, dadurch gekennzeichnet, daß der Absorptionsraum der Mehrkammerzelle bei nachlassender Absorberkapazität zur Regeneration alternierend als Kathodenraum eingesetzt wird, während der Kathodenraum als Absorber arbeitet (Fig. 2).

4. Vorrichtung zur Entfernung von $SO_2$ aus $SO_2$-haltigen Gasen nach Anspruch 1, bestehend aus mehreren untereinander durch Diaphragmen verbundenen Teilkammern, von denen eine mit einer Füllung und/oder Einbauten versehen ist, die eine chemische Umsetzung von $SO_2$ in Gegenwart von Kupfer und/oder Kupferoxid und Luft und/oder Sauerstoff ermöglicht (Absorptionsraum), eine weitere mit elektrisch leitfähigen Füllkörpern und/oder Elektrodeneinbauten versehen ist, die eine elektrochemische Oxidation von gelöstem $SO_2$ ermöglichen (Anodenraum) und eine weitere mit elektrisch leitfähigen Füllkörpern und/oder Einbauten versehen ist, die zur elektrochemischen Reduktion von gelöstem Kupfer benutzt wird (Kathodenraum).

5. Vorrichtung nach Anspruch 2 dadurch gekennzeichnet, daß Absorberraum und Kathodenraum eine räumliche Einheit bilden können, wenn der kathodische Prozeß über die maximale Eindringtiefe des Stromes auf einen Teilbereich der Schüttung bzw. der Einbauten begrenzt wird.

**Claims**

1. Process for the removal of $SO_2$ from $SO_2$-laden gases, distinguished by the fact that a multi-chamber cell consisting of several sub-chambers connected with one another by diaphragms is used, in which a portion of the $SO_2$ oxidizes in one sub-chamber in the presence of an aqueous medium, air and/or oxygen and of copper oxide and/or metallic copper, with the formation of copper sulphate, which dissolves in the aqueous media, and is thus removed from the gas flow and in a further sub-chamber containing electrically conductive packing and/or electrode internals a further portion of the $SO_2$ is contacted with an electrolytically conductive scrubbing fluid and the $SO_2$ electrochemically removed from the gas flow to be cleaned by means of anodic oxidation after absorption, the dissolved copper formed in $SO_2$ removal being reduced to metallic copper on electrically conductive packing and/or electrode internals as a cathodic counterreaction in a further chamber of the multi-chamber cell.

2. Process in accordance with Claim 1, distinguished by the fact that the absorber capacity of the absorption chamber of the multi-chamber cell is regenerated in case of a decrease in absorber capacity by means of the addition of copper-rich material and the removal of copper-depleted material, it being possible either to utilize as fresh part material either metallic copper from the copper recovery process taking place in the cathode chamber, or extraneous copper (Fig. 3.1, 3.2).

3. Process in accordance with Claim 1, distinguished by the fact that the absorption chamber of the multichamber cell can be used alternatingly as the cathode chamber for regeneration in case of a decrease in absorber capacity, while the cathode chamber serves as the absorber (Fig. 2).

4. System for the removal of $SO_2$ from $SO_2$-laden gases in accordance with Claim 1, consisting of several sub-chambers connected to one another by diaphragms, one of which chambers is equipped with a packing and/or internals which makes possible chemical conversion of $SO_2$ in the presence of copper and/or copper oxide and air and/or oxygen (absorption chamber), a further one of which chambers is

equipped with electrically conductive packing and/or electrode internals, which make possible electrochemical oxidation of dissolved $SO_2$ (anode chamber), and a further one of which is equipped with electrically conductive packing and/or internals, which are used for electrochemical reduction of dissolved copper (cathode chamber).

5. System in accordance with Claim 2, distinguished by the fact that the absorber chamber and cathode chamber may form a single spatial unit provided the cathodic process is restricted to a partial area of the bed and/or of the internals across the maximum penetration depth of the current.

**Revendications**

1. Procédé pour l'élimination du $SO_2$ contenu dans des gaz à teneur en $SO_2$, caractérisé par l'utilisation d'une cellule à plusieurs multi-compartiments séparés entre eux par des diaphragmes, dans laquelle une partie du $SO_2$ est oxydée dans un compartiment partiel en présence d'un milieu aqueux, d'air et/ou d'oxygène et d'oxyde de cuivre et/ou de cuivre métallique sous formation de sulfate de cuivre qui se dissout dans le milieu aqueux, ce $SO_2$ oxydé étant éliminé du courant de gaz et amené en contact avec un liquide de lavage conducteur électrolytique dans un autre compartiment partiel contenant un corps de charge conducteur et/ou des montages d'électrodes dans lesquels, après l'absorption, le $SO_2$ est électrochimiquement éliminé du courant de gaz à épurer par une oxydation anodique, le cuivre dissous formé lors de l'élimination du $SO_2$ étant réduit à du cuivre métallique sur un corps de charge conducteur et/ou des montages d'électrodes en tant que contre-réaction dans un autre compartiment de la cellule à multi-compartiments.

2. Procédé selon la revendication 1, caractérisé par le fait que la capacité d'absorption de l'espace absorbeur de la cellule à multi-compartiments est régénérée par l'ajout d'un matériau plus riche en cuivre et par l'élimination du matériau pauvre en cuivre lorsque la capacité d'absorption diminue, le matériau partiel frais consistant en du cuivre métallique provenant de la récupération de cuivre dans l'espace à cathode ou en du cuivre provenant de l'extérieur (fig. 3.1, 3.2).

3. Procédé selon la revendication 1, caractérisé par le fait que l'espace d'absorption de la cellule à multi-compartiments est alternativement employé comme espace à cathode pour la régénération lorsque la capacité d'absorption diminue tandis que l'espace à cathode sert d'absorbeur (fig. 2).

4. Dispositif pour l'élimination du $SO_2$ contenu dans des gaz à teneur en $SO_2$ selon la revendication 1, se composant de plusieurs compartiments partiels reliés entre eux par des diaphragmes ; l'un de ces compartiments est doté d'une charge et/ou de montages qui permettent une conversion chimique du $SO_2$ en présence de cuivre et/ou d'oxyde de cuivre et d'air et/ou d'oxygène (espace d'absorption), un autre contient des corps de charge conducteurs et/ou des montages d'électrodes qui permettent une oxydation électrochimique du $SO_2$ dissous (espace à anode) et un troisième compartiment est garni de corps de charge conducteurs et/ou de montages utilisés pour la réduction électrochimique du cuivre dissous (espace à cathode).

5. Dispositif selon la revendication 2, caractérisé par le fait que l'espace absorbeur et l'espace à cathode peuvent former une unité lorsque le processus cathodique est limité par la profondeur de pénétration maximale du courant à une plage partielle du remblai ou des montages.

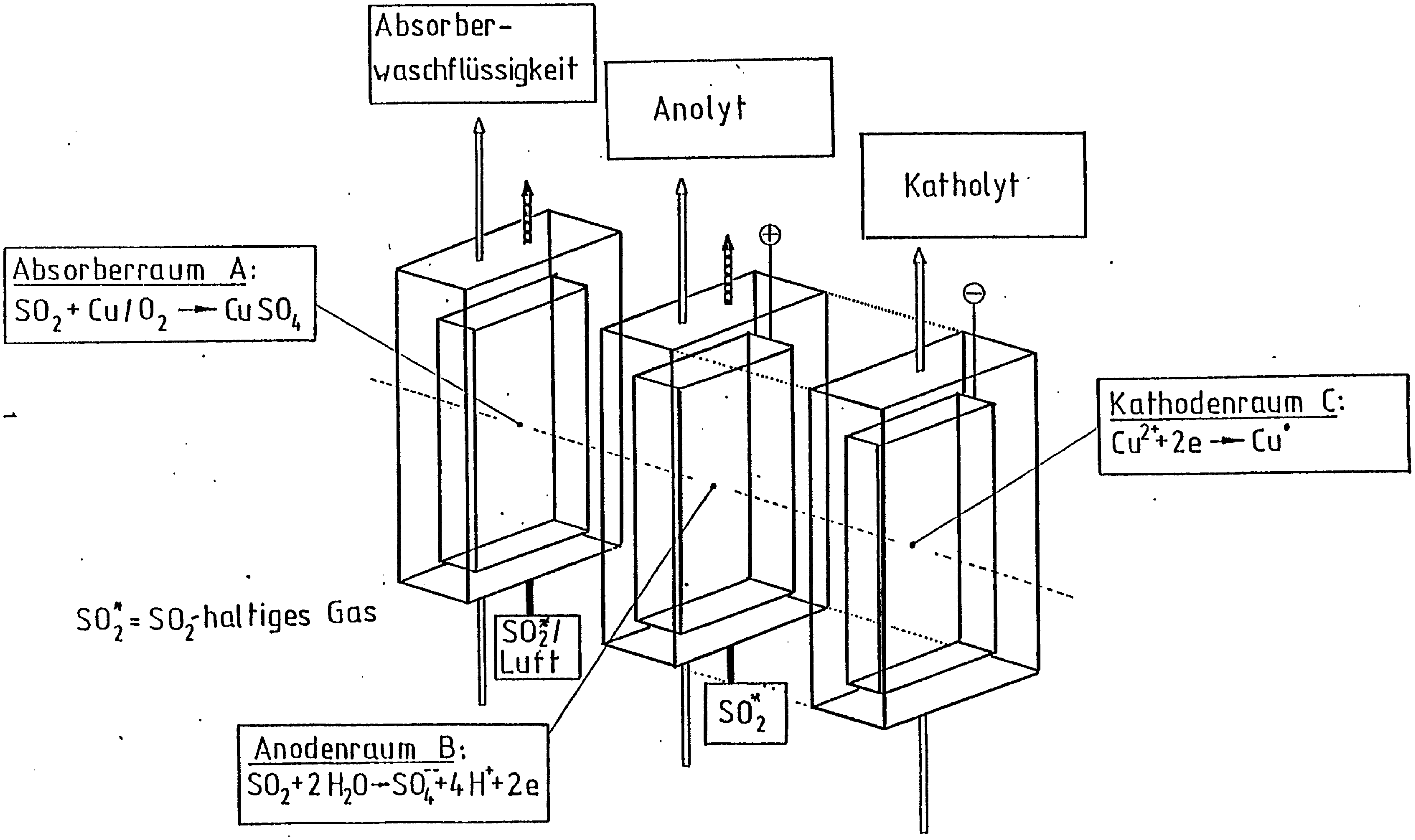
Absorber-
waschflüssigkeit
Anolyt
Katholyt
Absorberraum A:
$SO_2 + Cu/O_2 \rightarrow CuSO_4$
Kathodenraum C:
$Cu^{2+} + 2e \rightarrow Cu^{\circ}$
$SO_2^{*} = SO_2$-haltiges Gas
$SO_2^{*}$/
Luft
$SO_2^{*}$
Anodenraum B:
$SO_2 + 2H_2O \rightarrow SO_4^{--} + 4H^{+} + 2e$

Fig. 1

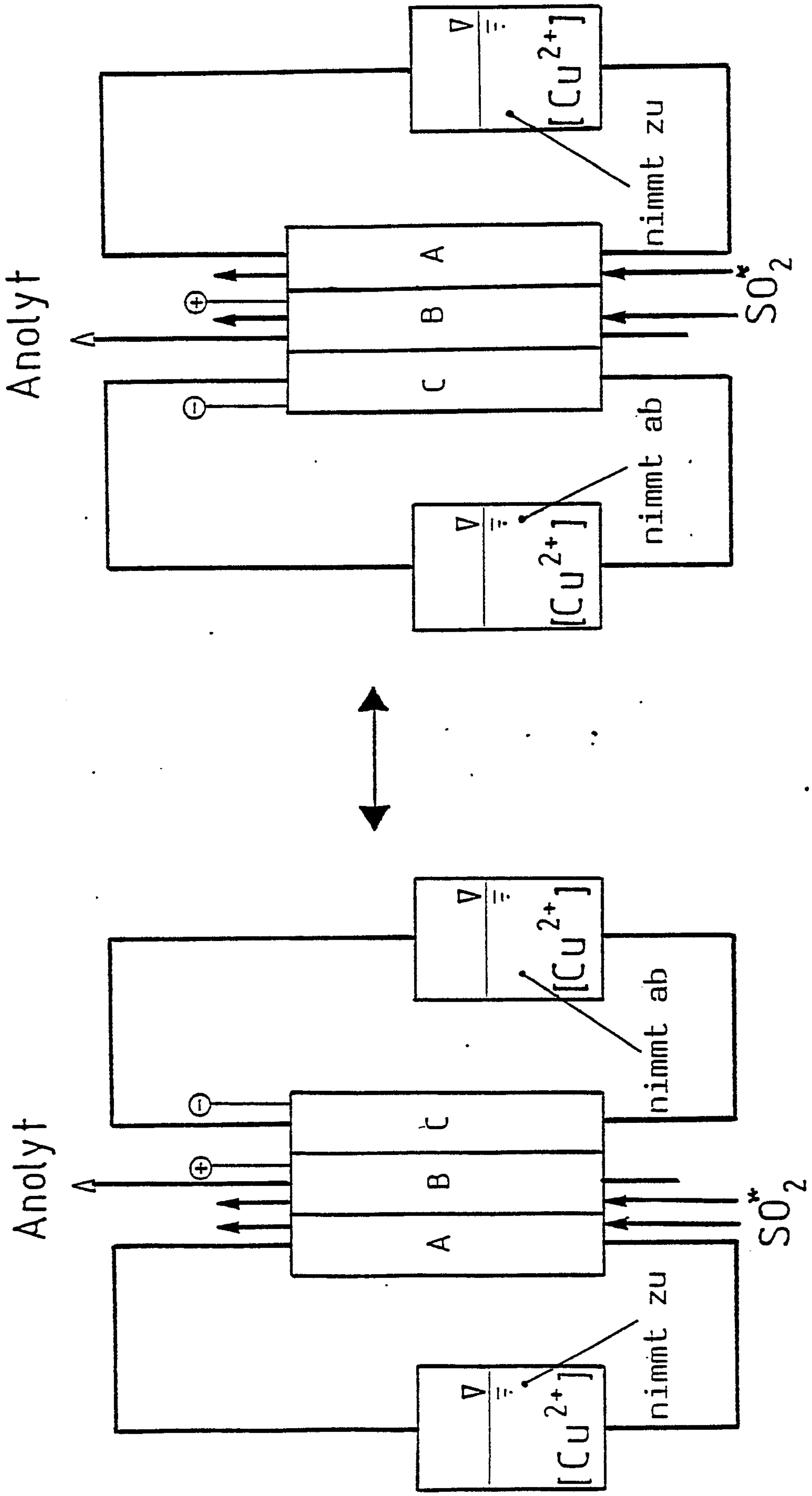
Anolyt
A
B
C
$SO_2^*$
nimmt zu
nimmt ab
$[Cu^{2+}]$
Anolyt
A
B
C
$SO_2^*$
nimmt ab
nimmt zu
$[Cu^{2+}]$

Fig. 2

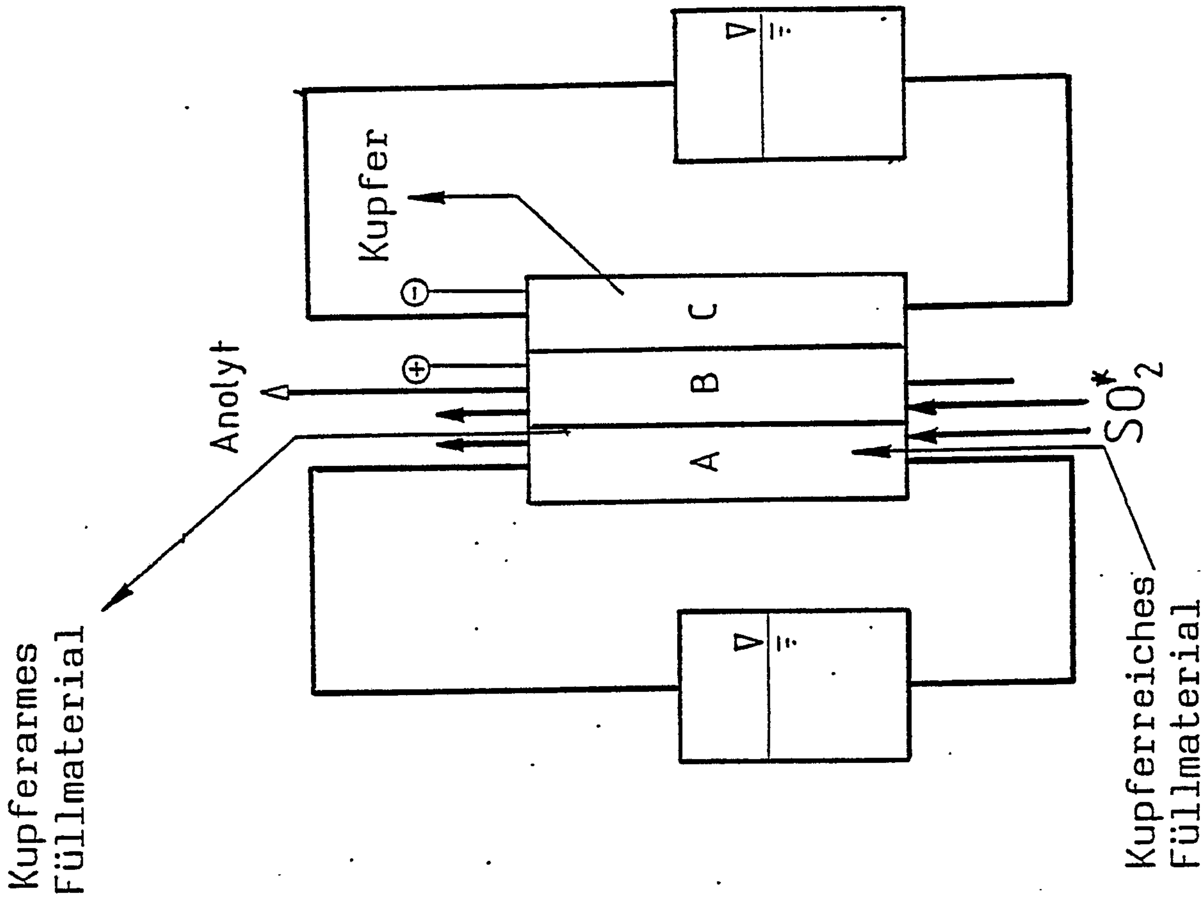
Kupfer
Anolyt
Kupferarmes Füllmaterial
Kupferreiches Füllmaterial
A
B
C
$SO_2^*$

Fig. 3.2

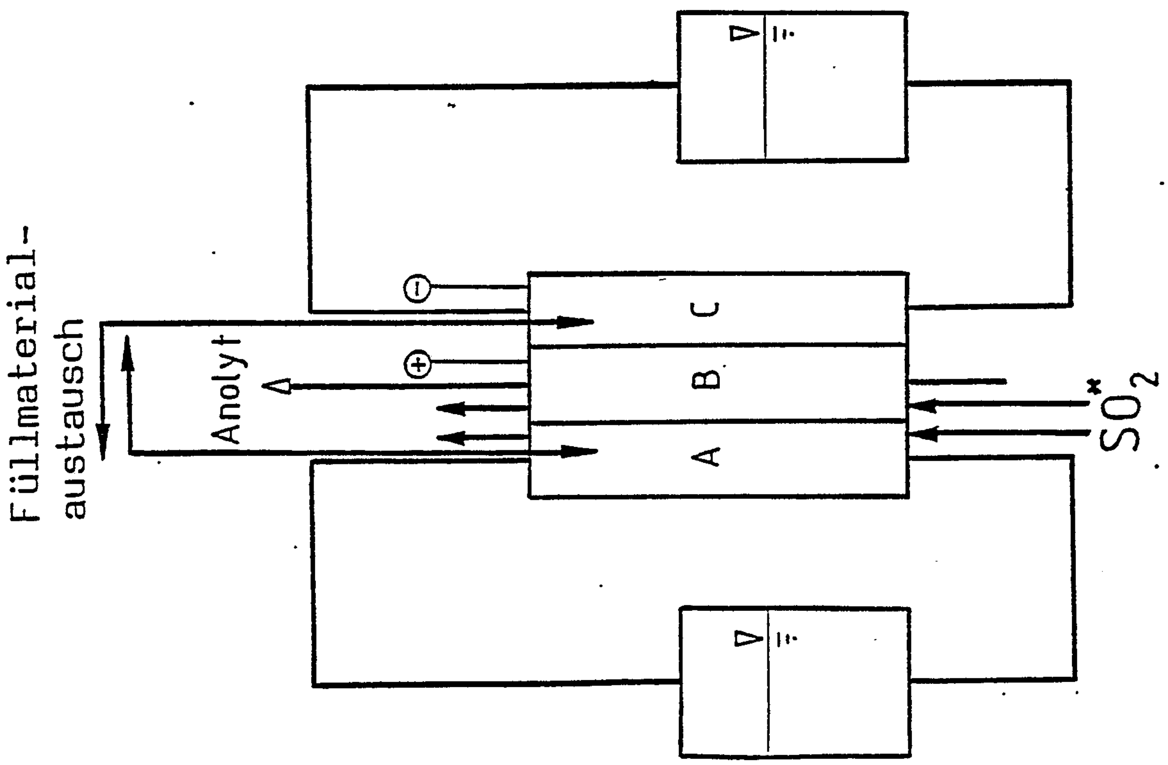
Füllmaterial-austausch
Anolyt
A
B
C
$SO_2^*$

Fig. 3.1